# EUROPÄISCHE PATENTANMELDUNG

(11) **EP 1 041 836 A2**
(43) Veröffentlichungstag der Anmeldung: **04.10.2000**
(21) Anmeldenummer: 00104354.6
(22) Anmeldetag: 02.03.2000
(51) Int. Cl.: H04Q 7/38

(54) **Verfahren zur Auswalhl einer zentralen, drahtlosen Kommunikationseinheit aus einer Vielzahl von zentralen Kommunikationseinheiten**

(30) Priorität: 31.03.1999 DE 19914745
(71) Anmelder: SIEMENS AKTIENGESELLSCHAFT, 80333 München (DE)
(72) Erfinder: Sibila, Arnd, 82272 Moorenweis (DE)

(57) **Zusammenfassung**

Abweichend vom "Best Server Prinzip" wird in einer dezentralen Kommunikationseinheit (RNT) mit Hilfe von empfangenen Rundsendenachrichten (rn1...3) überprüft, ob die aktuell nutzbaren Ressourcen (rs1...3) einer ausgewählten zentralen Kommunikationseinheit (RBS1...3) einen vorgegebenen Umfang (isdn) aufweisen. Bei einem einen nicht ausreichenden Umfang (isdn) anzeigenden Überprüfungsergebnis wird die von zumindest einer weiteren zentralen Kommunikationseinheit ausgesendete Rundsendenachricht (rn1...3) empfangen und überprüft. Vorteilhaft wird die Wahrscheinlichkeit eines erfolgreichen Verbindungsaufbaus erhöht.

## Beschreibung

Bei drahtlosen, auf Funkkanälen basierenden Kommunikationsnetzen, insbesondere bei Punkt-zu-Multipunkt Funk-Zubringernetzen - auch als "radio in the lokal loop" bzw. "RLL" oder "Wireless Local Loop" bzw. "WLL" bezeichnet - sind mehrere als Netzabschlußeinheiten ausgestaltete dezentrale Kommunikationseinheiten jeweils über einen oder mehrere Funkkanäle an eine Basisstation - auch als "Radio Base Station" bzw. "RBS" bezeichnet - angeschlossen. Im telcom report Nr. 18 (1995), Heft 1, "Drahtlos zum Freizeichen", Seite 36, 37 ist beispielsweise ein drahtloses Zubringernetz - auch als Teilnehmerzugangsnetz oder Access-Network bezeichnet - für die drahtlose Sprach- und Datenkommunikation beschrieben. Das beschriebene Kommunikationssystem stellt einen RLL-Teilnehmeranschluß in Kombination mit moderner Breitband-Infrastruktur dar - z.B. "Fiber to the Curb" -, welches in kurzer Zeit und ohne großen Aufwand anstelle der Verlegung von drahtgebundenen Anschlußleitungen realisierbar ist. Die den einzelnen Teilnehmern zugeordneten Netzabschlußeinheiten RNT - Radio Network Termination - sind über das Übertragungsmedium "Funkkanal" und über Basisstationen RBS an ein übergeordnetes Kommunikationsnetz, beispielsweise an das ISDN-orientierte Festnetz, angeschlossen. Die drahtlosen Funkkanäle können beispielsweise mit Hilfe schmalbandiger drahtloser Übertragungsverfahren bzw. Funkstandards - z.B. DECT oder CDMA - realisiert sein, wobei insbesondere gemäß dem DECT-Standard ausgestaltete Zubringernetze für hohe Verkehrsaufkommen in zukünftigen Ballungszentren geeignet sind.

Im internationalen DECT-Standard - ETSI-Empfehlung ETS 300 175 Teil 1 bis 9 - sind die physikalischen und prozeduralen Eigenschaften definiert. Die Übertragung von Informationen erfolgt jeweils über eine gemäß dem DECT-Standard ausgestaltete DECT-Luftschnittstelle, über welche durch eine Kombination von FDMA-, TDMA- und TDD-Zugriffsverfahren (Frequency Division Multiple Access / Time Division Multiple Access / Time Division Duplex) auf das drahtlose Übertragungsmedium "DECT-Funkkanal" zugegriffen wird. Hierbei stehen im Frequenzbereich zwischen 1880 MHz und 1900 MHz 10 Trägerfrequenzen mit einen Kanalabstand von jeweils 1,728 MHz zur Verfügung (FDMA), wobei der pro Träger festgelegte Zeitrahmen in 24 Zeitschlitze bzw. Kanäle - auch als "Slots" bezeichnet - eingeteilt ist (TDMA). Ein in 24 Zeitschlitze unterteilter Zeitrahmen - auch als "Frame" bezeichnet - wiederholt sich periodisch alle 10 ms. Innerhalb eines Zeitrahmens werden die für eine bidirektionale Informationsübermittlung erforderlichen Hin- und Rückkanäle durch das "Time Division Duplex"-Verfahren (TDD) realisiert. Durch den Duplexbetrieb werden die ersten 12 Zeitschlitze eines Rahmens zum Senden von Informationen bzw. Nutzdaten von der Basisstation an die dezentralen Netzabschlußeinheiten und die restlichen 12 Zeitschlitze zum Senden von Nutzdaten von den drahtlosen Netzabschlußeinheiten zu einer Basisstation verwendet. Auf einer Trägerfrequenz sind beispielsweise 12 Duplexkanäle realisierbar. Insgesamt werden bei einem nach dem DECT-Standard ausgestalteten Funk-Kommunikationsnetz jeweils 12 Duplexkanäle auf jeder der 10 Trägerfrequenzen und somit 120 Duplexkanäle bereitgestellt. Durch eine Integration einer dezentralen Netzabschlußeinheit in ein Kommunikationsendgerät kann dieses als mobiles Kommunikationsendgerät ausgestaltet und ebenfalls an einer Basisstation drahtlos angeschlossen werden. Im folgenden werden die dezentralen Netzabschlußeinheiten auch als dezentrale Kommunikationseinheiten und die Basisstationen auch als zentrale Kommunikationseinheiten bezeichnet.

Bei überwiegend im privaten Bereich eingesetzten Einzellensystemen können mehrere dezentrale Kommunikationseinheiten, bzw. mobile Kommunikationsendgeräte an einer Basisstation betrieben werden. Weiterhin sind Mehrzellensysteme bekannt, bei welchen mehrere Basisstationen einem zusammengehörigen, drahtlosen Kommunikationssystem - z.B. einem drahtlosen DECTlink-Kommunikationssystem der Firma Siemens; siehe "DECTlink Radio Access: Where Performance Counts",1996, Public Communication Networks Group, Siemens AG - zugeordnet und über eine Basisstation-Kontrolleinheit an das übergeordnete Kommunikationsnetz angeschlossen sind. Derartige drahtlose Kommunikationssysteme werden gemäß dem DECT-Standard auch als "Fixed Part" FP bezeichnet. Insbesondere für öffentliche Mehrzellensysteme kann ein zusätzliches Authentifikationsmodul zur Identifizierung der an die Basisstation angeschlossenen Teilnehmer vorgesehen werden. Bei einem Mehrzellensystem werden durch jede mit Hilfe einer Basisstation realisierte Zelle die selben Leistungsmerkmale wie bei einem Einzellensystem unterstützt, wobei durch den Zusammenschluß mehrerer Zellen der Aktionsradius vergrößert wird. Mit Hilfe von öffentlichen Mehrzellensystemen können beispielsweise drahtlose Teilnehmerzugangsnetze realisiert werden.

Gemäß dem DECT-Basisstandard weist jeder Zeitschlitz bzw. "Slot" ein Zeitfenster mit einer zeitlichen Ausdehnung von 416 µs auf, wobei in jedem Zeitschlitz jeweils 424 Bit Datenumfang aufweisende Informationen übermittelt werden. Jedes innerhalb eines DECT-Zeitschlitzes übermittelte Datenpaket weist neben einem Nutzdatenfeld - auch als "B-Feld" bezeichnet - unter anderem ein 64 Bit Datenumfang aufweisendes Signalisierungsdatenfeld - auch als "A-Feld" bezeichnet - zur Übermittlung von Signalisierungs- und Kontrolldaten von der Basisstation an die im Funkbereich der Basisstation angeordneten dezentralen Kommunikationseinheiten auf. Die von jeder Basisstation über eine als Rundsendekanal bezeichnete Frequenz-/Zeitschlitz-Kombination an alle dezentralen Kommunikationseinheiten ausgesendeten Signalisierungs- und Kontrolldaten werden auch als Rundsendenachrichten bezeichnet, in welche unterschiedliche Arten von Rundsendeinformationen - auch als "Broadcast-Information" bezeichnet - einfügbar sind. Mit Hilfe des Signalisierungsdatenfeldes bzw. A-Feldes wird eine Übertragungskapazität von 4,8 KBit/s für die Übermittlung von basisstation-spezifischen Rundsendenachrichten parallel zur Übermittlung von Nutzinformationen bereitgestellt, wobei die durch das A-Feld bereitgestellte Signalisierungskapazität einem der im DECT-Basisstandard ETS 300 175 - 3 (MAC-Layer), Kapitel 6.2.2.1.1 definierten, logischen Kanäle zugeordnet werden kann. Über einen dieser logischen Kanäle - hier als P-Kanal bezeichnet - werden beispielsweise Paging-Informationen - auch als P_{T}-Rundsendeinformationen bezeichnet - an alle im Funkbereich einer Basisstation angeordneten dezentralen Kommunikationseinheiten übermittelt. Über den P-Kanal wird den dezentralen Kommunikationseinheiten neben der Kennummer der Basisstation weitere wichtige MAC-Layer-Informationen übermittelt. So werden z.B. Blind Slot-Informationen übertragen, die aktuelle Bearer-Qualität bewertet und Vorschläge für weitere qualitativ gute Kanäle übermittelt - vgl. ETS 300 175-3, Kapitel 7.2.4.3.

Vor der ersten Übermittlung von Informationen mit Hilfe der von der Basisstation bereitgestellten Ressourcen - auch als "Bearer" bezeichnet - muß durch die dezentrale Kommunikationseinheit und der Basisstation ein physikalischer Kanal des Übertragungsmediums "DECT-Funkkanal" ausgewählt werden. Um eine Auswahl eines physikalischen Kanals des Übertragungsmediums "DECT-Funkkanal" zu ermöglichen werden in einem ersten Schritt durch die dezentrale Kommunikationseinheit die empfangenen Signalpegel - auch als Radio Signals Strength Indicator, RSSI bezeichnet - der einzelnen Basisstationen erfaßt und bewertet, wobei die Identitäten der empfangbaren Basisstationen in der dezentralen Kommunikationseinheit gespeichert werden. Dieser Vorgang wird auch als Mehrzellensuche bezeichnet. In Abhängigkeit des Bewertungsergebnisses ist die dezentrale Kommunikationseinheit immer derjenigen Basisstation mit der höchsten gemessenen Empfangsfeldstärke zugeordnet - auch als "Best-Server-Prinzip" bezeichnet. Diese Zuordnung wird auch als "Einlocken" an der am besten empfangenen Basisstation bezeichnet, wobei die an der Basisstation "eingelockte" dezentrale Kommunikationseinheit eine DECT-Rahmen- und DECT-Multirahmen-Synchronität - bei einer Realisierung einer Verschlüsselung der zu übermittelnden Informationen - zu dieser aufweist. Im eingelockten Zustand werden durch die dezentrale Kommunikationseinheit nur die Rundsendenachrichten derjenigen Basisstation empfangen und bewertet, an welcher die dezentrale Kommunikationseinheit aktuell eingelockt ist. Bei der Bewertung der Rundsendenachrichten werden die empfangenen Rundsendenachrichten beispielsweise nach für die jeweilige dezentrale Kommunikationseinheit bestimmten Paging-Informationen durchsucht, durch welche unter anderem das Rufen der dezentralen Kommunikationseinheiten gesteuert bzw. initialisiert wird.

In aktuell gemäß dem DECT-Standard ausgestalteten, drahtlosen Zubringernetzen sind einer an einer Basisstation eingelockten, dezentralen Kommunikationseinheit nur die Identitäten der in der unmittelbaren Umgebung der dezentralen Kommunikationseinheit angeordneten Basisstationen mit den höchsten Empfangsfeldstärken bekannt, wobei wie bereits erläutert, nur die Rundsendenachrichten bzw. Broadcast-Informationen derjenigen Basisstation bekannt sind, an welcher die dezentrale Kommunikationseinheit aktuell eingelockt ist. Für den Fall eines von einer dezentralen Kommunikationseinheit angeforderten Verbindungsaufbaus zu einer Basisstation, deren Übertragungsressourcen aktuell belegt sind oder für den Fall, daß eine bereits aktive Verbindung aufgrund einer schlechten Übertragungsqualität des Übertragungskanals an eine andere Basisstation übergeben werden muß - auch als "Intercell-Handover" bezeichnet - ist, bedingt durch die fehlende Auswertung der von den anderen Basisstationen ausgesendeten Rundsendenachrichten, die Wahrscheinlichkeit eines erfolgreichen Verbindungsaufbaus begrenzt. Beispielsweise sei ein Zugriff auf einen Kanal bzw. auf eine Frequenz-/Zeitschlitz-Kombination einer anderen Basisstation genannt, welche in der Blind-Slot-Maske - siehe ETS 300 175-3, Kapitel 7.2.4.3.3 - als nicht zugreifbar bzw. "Blind" gekennzeichnet ist.

In DE 199 03 018.9 ist ein Verfahren zum Empfangen von Rundsendenachrichten mehrerer Basisstationen beschrieben, bei dem von mehreren Basisstationen über basisstation-spezifische Rundsendekanäle jeweils Rundsendenachrichten an zumindest eine dezentrale Kommunikationseinheit ausgesendet werden. Durch Auswertung von in den jeweiligen Rundsendenachrichten enthaltenen Rundsendekanal-Informationen werden die von zumindest zwei Basisstationen ausgesendeten Rundsendenachrichten und die darin enthaltenen Broadcast-Informationen gleichzeitig empfangen und ausgewertet. Durch die Auswertung der Broadcast-Informationen - z.B. Blind-Slot-Informationen - sind der dezentralen Kommunikationseinheit die freien Kapazitäten aller empfangbaren Basisstationen bekannt. Hierfür sind jedoch spezielle Verfahren sowohl bei der Aussendung als auch beim Empfang der Rundsendenachrichten erforderlich.

Der Erfindung liegt die Aufgabe zugrunde, insbesondere bei mit Hilfe von Mehrzellensystemen realisierten RLL- bzw. WLL-Systemen die zur Verfügung stehenden funktechnischen Übertragungsressourcen effektiver zu nutzen. Die Aufgabe wird ausgehend von einem Verfahren gemäß dem Oberbegriff des Patentanspruch 1 durch dessen kennzeichnende Merkmale gelöst.

Beim erfindungsgemäßen Verfahren werden von mehreren zentralen Kommunikationseinheiten jeweils kommunikationseinheitspezifische, deren aktuell verfügbare und/oder nicht verfügbare drahtlose Ressourcen anzeigende Rundsendenachrichten ausgesendet und von zumindest einer dezentralen Kommunikationseinheit diejenige zentrale Kommunikationseinheit ausgewählt, deren empfangene Rundsendenachricht die beste Empfangsqualität aufweist. Der wesentliche Aspekt des erfindungsgemäßen Verfahrens besteht darin, daß in der zumindest einen dezentralen Kommunikationseinheit mit Hilfe der empfangenen Rundsendenachricht überprüft wird, ob die aktuell nutzbaren Ressourcen der ausgewählten zentralen Kommunikationseinheit einen vorgegebenen oder anpaßbaren Umfang aufweisen (a). Bei einem einen nicht ausreichenden Umfang der aktuell nutzbaren Ressourcen anzeigenden Überprüfungsergebnis wird die von zumindest einer weiteren zentralen Kommunikationseinheit ausgesendete Rundsendenachricht empfangen und überprüft (b).

Der wesentliche Vorteil des erfindungsgemäßen Verfahrens besteht darin, daß abweichend vom "Best Server Prinzip" die dezentrale Kommunikationseinheit immer an derjenigen Basisstation eingelockt ist bzw. die Rundsendenachrichten von derjenigen Basisstation empfängt, durch welche ausreichende Übertragungsressourcen als drahtlose Ressourcen zu der dezentralen Kommunikationseinheit bereitgestellt werden. Somit ist die Wahrscheinlichkeit eines erfolgreichen Verbindungsaufbaus sehr hoch, so daß eine optimale Ausnutzung der durch die zentralen Kommunikationseinheiten bereitgestellten, drahtlosen Übertragungsressourcen erreicht wird.

Vorteilhaft wird bei einem einen nicht ausreichenden Umfang der aktuell nutzbaren Ressourcen anzeigenden Überprüfungsergebnis in der dezentralen Kommunikationseinheit nacheinander die Rundsendenachricht von zumindest einer weiteren zentralen Kommunikationseinheit empfangen und überprüft. Bei einem einen ausreichenden Umfang der aktuell nutzbaren Ressourcen anzeigenden Überprüfungsergebnis ist die entsprechende zentrale Kommunikationseinheit ausgewählt - Anspruch 2.

Gemäß einer vorteilhaften Ausgestaltungsvariante des erfindungsgemäßen Verfahrens wird bei einem einen nicht ausreichenden Umfang der aktuell nutzbaren Ressourcen über eine vorgegebene oder anpaßbare Zeitspanne anzeigenden Überprüfungsergebnis in der dezentralen Kommunikationseinheit nacheinander die Rundsendenachricht von zumindest einer weiteren zentralen Kommunikationseinheit empfangen und überprüft. Bei einem einen ausreichenden Umfang der aktuell nutzbaren Ressourcen anzeigenden Überprüfungsergebnis ist die entsprechende zentrale Kommunikationseinheit ausgewählt - Anspruch 3. Durch diese vorteilhafte Ausgestaltung des erfindungsgemäßen Verfahrens wird die Stabilität des Verfahrens und eines aus mehreren zentralen Kommunikationseinheiten bestehenden Kommunikationssystems verbessert.

Vorteilhaft wird nach einer weiteren vorgegebenen oder anpaßbaren Zeitspanne die von der zuerst ausgewählten, zentralen Kommunikationseinheit ausgesendete Rundsendenachricht erneut empfangen und überprüft, wobei diese zentrale Kommunikationseinheit bei einem einen ausreichenden Umfang der aktuell nutzbaren Ressourcen anzeigenden Überprüfungsergebnis ausgewählt wird - Anspruch 4. Durch die wiederholte Überprüfung des "Best Servers" wird die Stabilität des Kommunikationssystems weiter verbessert.

Gemäß einer weiteren vorteilhaften Ausgestaltung des erfindungsgemäßen Verfahrens wird bei einem einen nicht ausreichenden Umfang der vorgegebenen Ressourcen anzeigenden Überprüfungsergebnis in der zumindest einen dezentralen Kommunikationseinheit diejenige zentrale Kommunikationseinheit ausgewählt, deren empfangene Rundsendenachricht die beste Empfangsqualität aufweist. Anschließend werden die Schritte (a) bis (b) durchgeführt - Anspruch 7. Die wiederholte Durchführung einer Mehrzellensuche nach Verlassen des "Best Servers" hat den Vorteil, daß zeitgesteuert immer ein Einlockvorgang an der aktuell als "Best Server" ermittelten Basisstation erfolgt, welche aktuell den besten Empfangspegel an der dezentralen Netzabschlußeinheit aufweist.

Weitere vorteilhafte Ausgestaltungen des erfindungsgemäßen Verfahrens sind den weiteren Ansprüchen zu entnehmen.

Im folgenden wird das erfindungsgemäße Verfahren anhand eines Blockschaltbildes näher erläutert.

Das Blockschaltbild zeigt ein drahtloses Teilnehmerzugangsnetz ACCESS, über das eine drahtlose Netzabschlußeinheit RNT mit einem übergeordneten, beispielsweise ISDN-orientierten Kommunikationsnetz IKN verbindbar ist. Im drahlosen Teilnehmerzugangsnetz ACCESS sind mehrere Basisstationen RBS1...3 angeordnet, an welche die drahtlose Netzabschlußeinheit RNT drahtlos anschließbar ist. Üblicherweise sind in einem drahtlosen Teilnehmerzugangsnetz ACCESS mehrere an die Basisstationen RBS1...3 drahtlos anschließbare Netzabschlußeinheiten RNT und mobile Kommunikationsendgeräte - nicht dargestellt - angeordnet, d.h. im Blockschaltbild sind in einem Ausführungsbeispiel lediglich die zur Erläuterung des erfindungsgemäßen Verfahrens erforderlichen Einrichtungen eines Teilnehmerzugangsnetzes ACCESS dargestellt, wobei die drei Basisstationen RBS1...3 jeweils eine zentrale Kommunikationseinheit und die drahtlose Netzabschlußeinheit RNT eine dezentrale Kommunikationseinheit repräsentieren. In diesem Ausführungsbeispiel ist das drahtlose Teilnehmerzugangsnetz ACCESS als DECT-Teilnehmerzugangsnetz gemäß dem internationalen DECT-Standard ETS 300 175-3 ausgestaltet, d.h. die drei gemäß dem DECT-Standard ausgestalteten und jeweils das Zentrum einer Funkzelle bzw. eines Funkbereiches darstellenden Basisstationen RBS1...3 und die im Funkbereich der drei Basisstationen RBS1...3 angeordnete und ebenfalls gemäß dem DECT-Standard ausgestaltete, drahtlose Netzabschlußeinheit RNT sind über jeweils eine DECT-Luftschnittstelle und das Übertragungsmedium "DECT-Funkkanal" miteinander verbindbar. Die drei Basisstationen RBS1...3 sind über eine Verbindungsleitung mit einer Teilnehmerzugangsnetz-Kontrolleinrichtung STRG verbunden, welche an das übergeordnete ISDN-orientierte Kommunikationsnetz IKN angeschlossen ist.

In diesem Ausführungsbeispiel ist die drahtlose Netzabschlußeinheit RNT als ISDN-konforme Netzabschlußeinheit zum Anschluß von zumindest einem ein dezentrales Kommunikationsendgerät DKE repräsentierenden ISDN-Kommunikationsendgerät ausgestaltet, wobei durch die drahtlose Netzabschlußeinheiten RNT entsprechende ISDN-konforme Übertragungsressourcen isdn bereitgestellt werden. An die drahtlose Netzabschlußeinheit RNT kann beispielsweise ein Personalcomputer mit ISDN-Karte oder ein ISDN-Fernsprechendgerät angeschlossen werden. Bei Auslastung aller durch die drahtlose ISDN-Netzabschlußeinheit RNT bereitgestellten Übertragungsressourcen isdn - d.h. gleichzeitige Übermittlung von Informationen über zwei ISDN-B- und einem ISDN-D-Kanal - werden durch die drahtlose Netzabschlußeinheit RNT gleichzeitig zwei gemäß dem DECT-Standard definierte "Double Slot Duplex Bearer" und zusätzlich ein "Full Slot Duplex Bearer" auf der DECT-Luftschnittstelle benötigt. Im Gegensatz dazu wird durch ein schnurloses mobiles DECT-Fernsprechendgerät - auch als DECT-Handy bezeichnet, nicht dargestellt - nur ein "Full Slot Duplex Bearer" auf der DECT-Luftschnittstelle benötigt.

Zur Realisierung des "Best Server Prinzips" weist die drahtlose Netzabschlußeinheit RNT eine Auswertevorrichtung ASW auf, durch welche die Empfangseigenschaften der einzelnen Basisstationen RBS1...3 an der drahtlosen Netzabschlußeinheit RNT gemäß dem DECT-Standard - d.h. Messung der RSSI-Werte der einzelnen empfangbaren Basisstationen RNT1...3 - erfaßt und bewertet werden. Der Auswertevorrichtung ASW ist ein Speicher MEM zugeordnet, im welchem eine Tabelle tab - im Blockschaltbild vergrößert dargestellt - gespeichert ist. Die Tabelle tab weist mehrere Tabelleneinträge te1...n auf, wobei in den ersten drei Tabelleneinträgen te1...3 jeweils die Identität RBS1...3 einer der drei an der drahtlosen Netzabschlußeinheit RNT empfangbaren Basisstationen RBS1...3 und der entsprechend gemessene Empfangspegel RSSI1...3 der jeweiligen Basisstation RBS1...3 gespeichert ist.

In diesem Ausführungsbeispiel ist die Tabelle tab nach den gemessenen Empfangspegeln RSSI1...3 sortiert, d.h. die erste Basisstation RBS1 wird mit dem besten Empfangspegel RSSI1, die zweite Basisstation RBS2 mit dem zweitbesten Empfangspegel RSSI2 und die dritte Basisstation RBS3 mit dem schlechtesten Empfangspegel RSSI3 an der dezentralen Kommunikationseinheit RNT empfangen. Gemäß dem "Best-Server-Prinzip" wird durch die drahtlose Netzabschlußeinheit RNT die erste Basisstation RBS1 als "Best-Server" ausgewählt und eine DECT-Rahmen- und eine DECT-Multirahmen-Synchronität zur ersten Basisstation RBS1 hergestellt - auch als "Einlocken" am "Best-Server" bezeichnet. Im eingelocktem Zustand werden von der drahtlosen Netzabschlußeinheit RNT die von der ersten Basisstation RBS1 ausgesendeten Rundsendenachrichten rn1 - Broadcast-Informationen gezielt empfangen, ausgewertet und optional in der drahtlosen Netzabschlußeinheit RNT gespeichert. In die von den Basisstationen RBS1...3 ausgesendeten Rundsendenachrichten rn1...3 sind neben den für die vermittlungstechnischen und prozeduralen Vorgänge - z.B. Synchronisierung sowie Anmeldung und Verbindungsaufbau zu den Basisstationen RBS1...3 - erforderlichen Systeminformationen auch Informationen über die an den Basisstation aktuell verfügbaren, drahtlosen Ressourcen rs1...3 eingefügt.

Für die weitere Ausführung des erfindungsgemäßen Verfahrens sei angenommen, daß zum Zeitpunkt T1 durch die erste Basisstation RBS1 erste drahtlose Ressourcen rs1, hier ein freier "Double Slot Duplex-Bearer", durch die zweite Basisstation RBS2 zweite drahtlose Übertragungsressourcen rs2, hier drei freie "Double Slot Duplex-Bearer" und ein freier "Full Slot Duplex-Bearer", und durch die dritte Basisstation RBS3 dritte drahtlose Übertragungsressourcen rs3, hier vier freie "Double Slot Duplex-Bearer" und zwei freie "Full Slot Duplex-Bearer", für eine drahtlose Informationsübermittlung bereitgestellt werden.

Erfindungsgemäß wird durch die in der drahtlosen Netzabschlußeinrichtung RNT angeordnete Auswertevorrichtung ASW die von der ersten Basisstation aktuell bereitgestellten Übertragungsressourcen rs1 überprüft. Beispielsweise werden die aktuell bereitgestellten Übertragungsressourcen rs1 dahingehend überprüft, ob im Falle einer Auslastung der Übertragungskapazität der drahtlosen Netzabschlußeinheit RNT die erforderlichen drahtlosen Ressourcen isdn durch die ausgewählte erste Basisstation RBS auf der DECT-Luftschnittstelle bereitgestellt werden. Dies erfolgt unabhängig vom aktuellen Auslastungs- und Vermittlungszustand der drahtlosen Netzabschlußeinheit RNT, d.h. unabhängig von der aktuellen Auslastung der Übertragungskapazität der drahtlosen Netzabschlußeinheit RNT und unabhängig davon, ob ein Verbindungsaufbau eingeleitet wurde. Wie bereits beschrieben, wird zum Zeitpunkt T1 durch die erste Basisstation RBS1 ein freier "Double Slot Duplex-Bearer" auf der DECT-Luftschnittstelle bereitgestellt; dieser ist jedoch bei einer eventuellen Auslastung aller Übertragungsressourcen isdn der drahtlosen Netzabschlußeinheit RNT für eine ordnungsgemäße Informationsübermittlung nicht ausreichend.

Erfindungsgemäß wird durch die Auswertevorrichtung ASW mit Hilfe der Tabelle tab überprüft, ob an der nächstbesten empfangbaren Basisstation, die zur Bereitstellung der ISDN-konformen Übertragungskapazität erforderlichen, drahtlosen Ressourcen verfügbar sind. Dazu wird mit Hilfe der in der Tabelle tab gespeicherten Empfangspegel RSSI1...3 die Identität der nächstbesten empfangbaren Basisstation - hier RBS2 - ermittelt und anschließend eine DECT-Rahmen und DECT-Multirahmen-Synchronität zu der zweiten Basisstation RBS2 hergestellt - Verlassen des "Best Server" und "Einlocken" an der zweiten Basisstation RBS2. Durch Auswertung der von der zweiten Basisstation RBS2 ausgesendeten Rundsendenachrichten rn2(rs2) wird überprüft, ob die im Falle einer Auslastung der Übertragungskapazität der drahtlosen Netzabschlußeinheit RNT erforderlichen, drahtlosen Ressourcen isdn durch die aktuell ausgewählte zweite Basisstation RBS2 auf der DECT-Luftschnittstelle bereitgestellt werden. Wie bereits beschrieben, werden zum Zeitpunkt T1 durch die zweite Basisstation RBS2 drei freie "Double Slot Duplex-Bearer" und zusätzlich ein freier "Full Slot Duplex-Bearer" auf der DECT-Luftschnittstelle bereitgestellt, welche ausreichen, um einer eventuellen Auslastung aller Übertragungsressourcen isdn der drahtlosen Netzabschlußeinheit RNT zu entsprechen. Folglich wird die DECT-Rahmen und DECT-Multirahmen-Synchronität zu der zweiten Basisstation RBS2 aufrechterhalten, d.h. durch die dezentrale Netzabschlußeinheit RNT wird ab dem Zeitpunkt T1 die von der zweiten Basisstation RBS2 ausgesendeten Rundsendenachrichten gezielt empfangen, bewertet und optional gespeichert.

Gemäß einer Ausgestaltungsvariante des erfindungsgemäßen Verfahrens wird aus Systemstabilitätsgründen der "best server" erst verlassen, falls dieser für eine gewisse Zeitdauer - beispielsweise über einen Zeitabschnitt von 10 Sekunden - belegt ist oder die erforderlichen, drahtlosen Ressourcen isdn über diese Zeitdauer nicht bereitgestellt werden können.

Erfindungsgemäß werden nach erfolgtem "Einlocken" der dezentralen Netzabschlußeinheit RNT an der zweiten Basisstation RBS2 durch die Auswerteeinheit ASW die an der zweiten Basisstation RBS2 aktuell verfügbaren drahtlosen Ressourcen rs2 laufend überprüft. Wird eine Nichtverfügbarkeit der erforderlichen drahtlosen Ressourcen isdn an der zweiten Basisstation RBS2 festgestellt - z.B. bedingt durch von weiteren an der zweiten Basisstation RBS2 eingelockten Netzabschlußeinheiten zusätzlich initiierten Verbindungen -, wird durch die in der dezentralen Netzabschlußeinheit RNT angeordnete Auswertevorrichtung ASW das erfindungsgemäße Verfahren in beschriebener Art und Weise erneut durchgeführt, d.h. es wird mit Hilfe der Tabelle tab diejenige Basisstation RBS1...3 mit den besten Empfangseigenschaften ermittelt, durch welche die erforderlichen ISDN-konformen Übertragungsressourcen aktuell auf der DECT-Luftschnittstelle bereitgestellt werden. Beispielsweise wird mit Hilfe der Tabelle tab die dritte Basisstation RBS3 ermittelt, durch welche vier freie "Double slot Duplex-Bearer" und zusätzlich zwei freie "Full Slot Duplex-Bearer" auf der DECT-Luftschnittstelle bereitgestellt werden.

Wie bereits erläutert, wird gemäß dem erfindungsgemäßen Verfahren der "Best Server" verlassen, falls durch diesen die erforderlichen drahtlosen Ressourcen nicht mehr bereitgestellt werden. Gemäß einer weiteren Ausgestaltungsvariante des erfindungsgemäßen Verfahrens wird nach Verlassen des "Best Servers" und nach erfolgtem "Einlocken" an der nächstbesten Basisstation - hier z.B. RBS2 - nach Ablauf eines weiteren Zeitabschnitts - z.B. nach Ablauf von 60 Sekunden - zu einem Zeitpunkt T2 durch die Auswertevorrichtung ASW in beschriebener Art und Weise erneut überprüft, ob die erforderlichen drahtlosen Ressourcen isdn wieder durch den ursprünglichen ausgewählten und die besten Empfangseigenschaften an der drahtlosen Netzabschlußeinheit RNT aufweisenden "Best Server" - hier die erste Basisstation RBS1 - bereitgestellt werden.

Alternativ kann nach Verlassen des "Best Servers" und nach dem "Einlocken" an der nächstbesten Basisstation, gesteuert durch die Auswertevorrichtung ASW zu Zeitpunkt T1, T2 die in der Beschreibungseinleitung beschriebene Mehrzellensuche erneut initialisiert werden, d.h. durch die drahtlose Netzabschußeinheit RNT werden die Identitäten der empfangbaren Basisstationen RBS1...3 erneut ermittelt, die entsprechenden Empfangspegel RSSI1...3 erneut gemessen und in Abhängigkeit der gemessenen Empfangspegel RSSI1...3 der "Best Server" erneut bestimmt. Anschließend werden die verfügbaren drahtlosen Ressourcen am neu ermittelten "Best Server" überprüft. In einem stabilen Kommunikationssystem sollte nach der wiederholten Durchführung der Mehrzellensuche wieder diejenige Basisstation als "Best Server" ermittelt werden, welche zuvor wegen der aktuellen Nichtbereitstellung der erforderlichen drahtlosen Ressourcen zum Zeitpunkt T1 verlassen wurde - hier die erste Basisstation RBS1. Es kann jedoch auch der Fall eintreten, daß durch die Auswertevorrichtung eine neue Basisstation - z.B. die zweite oder dritte Basisstation RBS2,3 - als "Best Server" mit dem besten Empfangspegel RSSI2,3 ermittelt wird. Diese Ausgestaltungsvariante hat den Vorteil, daß zeitgesteuert immer ein Einlockvorgang an der aktuell als "Best Server" ermittelten Basisstation RBS1...3 erfolgt, welche aktuell den besten Empfangspegel RSSI1...3 an der dezentralen Netzabschlußeinheit aufweist.

Wie bereits in der Beschreibungseinleitung erläutert, sind drahtlose Kommunikatiossysteme bekannt, bei denen durch die dezentale Kommunikationseinheit die von mehreren Basisstationen ausgesendeten Rundsendenachrichten empfangen und ausgewertet werden. Durch die Auswertung der in den Rundsendenachrichten enthaltenen Broadcast-Informationen sind der dezentralen Kommunikationseinheit die freien Kapazitäten aller empfangbarer Basisstationen bekannt. Auch in derartigen Kommunikationssystemen kann das erfindungsgemäße Verfahren eingesetzt werden. Durch die Kenntnis der Identitäten und der gemessenen Empfangswerte sowie durch die zusätzliche Kenntnis der aktuell verfügbaren Kapazitäten aller empfangbaren Basisstationen, kann durch die dezentrale Kommunikationseinheit jederzeit eine DECT-Rahmen- und DECT-Multirahmen-Synchronität zur der Basisstation hergestellt werden, deren empfangene Rundsendenachricht die beste Empfangsqualität in der drahtlosen Netzabschlußeinheit aufweist und gleichzeitig die erforderlichen freien drahtlosen Ressourcen isdn auf der DECT-Luftschnittstelle bereitstellt.

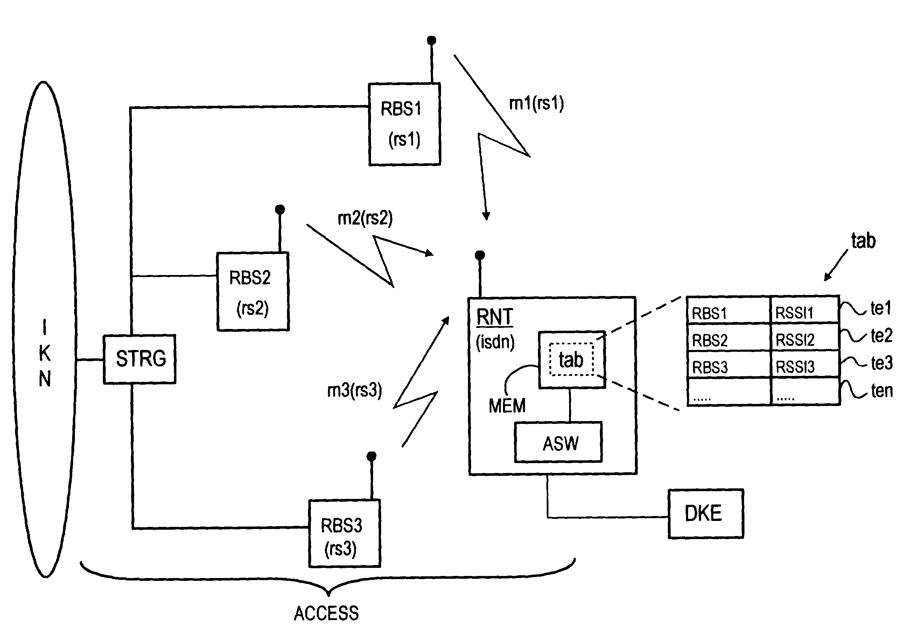

## Patentansprüche

1. Verfahren zur Auswahl einer zentralen, drahtlosen Kommunikationseinheit aus mehreren zentralen Kommunikationseinheiten (RBS1...3) durch zumindest eine dezentrale, drahtlose Kommunikationseinheit (RNT),
- bei dem von den zentralen Kommunikationseinheiten (RBS1...3) jeweils kommunikationseinheit-spezifische, deren aktuell verfügbare und/oder nicht verfügbare drahtlosen Ressourcen anzeigende Rundsendenachrichten (rn1...3) ausgesendet werden,
- bei dem in der zumindest einen dezentralen Kommunikationseinheit diejenige zentrale Kommunikationseinheit (RBS1...3) ausgewählt wird, deren empfangene Rundsendenachricht (rn1...3) die beste Empfangsqualität (RSSI1...3) aufweist,
**dadurch gekennzeichnet**,
(a) daß in der dezentralen Kommunikationseinheit (RNT) mit Hilfe der empfangenen Rundsendenachricht (rn1...3) überprüft wird, ob die aktuell nutzbaren Ressourcen (rs1...3) der ausgewählten, zentralen Kommunikationseinheit (RBS1...3) einen vorgegebenen oder anpaßbaren Umfang (isdn) aufweisen,
(b) daß bei einem einen nicht ausreichenden Umfang (isdn) der aktuell nutzbaren Ressourcen (rs1...3) anzeigenden Überprüfungsergebnis die von zumindest einer weiteren zentralen Kommunikationseinheit (RBS1...3) ausgesendete Rundsendenachricht (rn1...3) empfangen und überprüft wird.

2. Verfahren nach Anspruch 1
**dadurch gekennzeichnet**,
- daß bei einem einen nicht ausreichenden Umfang (isdn) der aktuell nutzbaren Ressourcen (rs1...3) anzeigenden Überprüfungsergebnis in der dezentralen Kommunikationseinheit (RNT) nacheinander die Rundsendenachricht (rn1...3) von zumindest einer weiteren zentralen Kommunikationseinheit (RBS1...3) empfangen und überprüft wird, und
- daß bei einem einen ausreichenden Umfang der aktuell nutzbaren Ressourcen (rs1...3) anzeigenden Überprüfungsergebnis die entsprechende zentrale Kommunikationseinheit (RBS1...3) ausgewählt ist.

3. Verfahren nach Anspruch 1
**dadurch gekennzeichnet**,
- daß bei einem einen nicht ausreichenden Umfang (isdn) der aktuell nutzbaren Ressourcen (rs1...3) über eine vorgegebene oder anpaßbare Zeitspanne anzeigenden Überprüfungsergebnis in der dezentralen Kommunikationseinheit (RNT) nacheinander die Rundsendenachricht (rn1...3) von zumindest einer weiteren zentralen Kommunikationseinheit (RBS1...3) empfangen und überprüft wird, und
- daß bei einem einen ausreichenden Umfang (isdn) der aktuell nutzbaren Ressourcen (rs1...3) anzeigenden Überprüfungsergebnis die entsprechende zentrale Kommunikationseinheit (RBS1...3) ausgewählt ist.

4. Verfahren nach Anspruch 2 oder 3,
**dadurch gekennzeichnet**,
- daß nach einer weiteren vorgegebenen oder anpaßbaren Zeitspanne die von der zuerst ausgewählten, zentralen Kommunikationseinheit (RBS1...3) ausgesendete Rundsendenachricht (rn1...3) erneut empfangen und überprüft wird, und
- daß diese zentrale Kommunikationseinheit (RBS1...3) bei einem einen ausreichenden Umfang der aktuell nutzbaren Ressourcen (rs1...3) anzeigenden Überprüfungsergebnis ausgewählt wird.

5. Verfahren nach einem der vorherigen Ansprüche,
**dadurch gekennzeichnet**,
daß die Auswahl der zumindest einen weiteren zentralen Kommunikationseinheit (RBS1...3)in Abhängigkeit von den Empfangsqualitäten der von den jeweiligen zentralen Kommunikationseinheiten (RBS1...3) ausgesendeten und in der zumindest einen dezentralen Kommunikationseinheit (RNT) empfangenen Rundsendenachrichten (rn1...3) erfolgt.

6. Verfahren nach einem der vorherigen Ansprüche,
**dadurch gekennzeichnet**,
daß der vorgegebene oder anpaßbare Umfang der aktuell nutzbaren Ressourcen (rs1...3) zumindest einen Übertragungskanal des Übertragungsmediums "Funkkanal" repräsentiert.

7. Verfahren nach einem der vorherigen Ansprüche,
**dadurch gekennzeichnet**,
- daß bei einem einen nicht ausreichenden Umfang der vorgegebenen Ressourcen (isdn) anzeigenden Überprüfungsergebnis in der zumindest einen dezentralen Kommunikationseinheit diejenige zentrale Kommunikationseinheit (RBS1...3) ausgewählt wird, deren empfangene Rundsendenachricht (rn1...n) die beste Empfangsqualität aufweist, und
- daß anschließend die Schritte (a) und (b) durchgeführt werden.

8. Verfahren nach einem der vorherigen Ansprüche,
**dadurch gekennzeichnet**,
daß die zentralen und dezentralen Kommunikationseinheiten (RBS1...3, RNT) gemäß dem internationalen DECT-Standard ETS 300 175 ausgestaltet sind.

9. Verfahren nach Anspruch 8,
**dadurch gekennzeichnet**,
daß die dezentrale Kommunikationseinheit (RNT) eine DECT-Rahmen- und DECT-Multirahmen-Synchronität zu der ausgewählten, zentralen Kommunikationseinheit (RBS1...3) aufweist.
